# EUROPÄISCHE PATENTANMELDUNG

(11) **EP 2 840 289 A1**
(43) Veröffentlichungstag der Anmeldung: **25.02.2015**
(21) Anmeldenummer: 14179689.6
(22) Anmeldetag: 04.08.2014
(51) Int. Cl.: F16K 37/00, F16K 1/20

(54) **Ventilklappenarmatur**

(30) Priorität: 08.08.2013 DE 202013103582 U
(71) Anmelder: W+Z Rohrsystem-Technik GmbH, 57250 Netphen-Deuz (DE)
(72) Erfinder: Wied, Christof, 57271 Hilchenbach (DE)
(74) Vertreter: Hennicke, Ernst Rüdiger

(57) **Zusammenfassung**

Die Erfindung betrifft eine Ventilklappenarmatur insbesondere für Hochdruckleitungen, mit einem eine Durchflussöffnung (22) aufweisenden Gehäuse (2) und mit einer im Gehäuseinnenraum (23) angeordneten, um eine Schwenkachse (S) schwenkbaren Ventilklappe (1), die zwischen einer die Durchflussöffnung verschließenden Schließstellung und Öffnungsstellungen verschwenkbar ist. Um einen Rückschlagschutz für Turbinen in Hochdruckleitungen zu schaffen, der mit geringem apparativen Aufwand eine funktionstechnische Überprüfung der Ventilklappenarmatur ermöglicht, ist eine Detektionseinrichtung (50) zum Erfassen der Endstellung und/oder der jeweiligen aktuellen Stellung der Ventilklappe vorgesehen, wobei die Detektionseinrichtung einen vorzugsweise lose an der Ventilklappe anliegenden Detektionsstößel (51) aufweist, der durch eine Schwenkbewegung der Ventilklappe entlang seiner Stößelachse (A) axial verschiebbar ist.

## Beschreibung

Die Erfindung betrifft eine Ventilklappenarmatur oder Rückschlagklappenarmatur insbesondere für Hochdruckleitungen und/oder den Turbinenschutz, mit einem eine Durchflussöffnung aufweisenden Gehäuse und mit einer im Gehäuseinnenraum angeordneten, um eine Schwenkachse schwenkbaren Ventilklappe, die zwischen einer die Durchflussöffnung verschließenden Schließstellung und Öffnungsstellungen verschwenkbar ist.

Ventilklappenarmaturen bzw. Rückschlagklappenarmaturen werden meistens als Rückflussverhinderer in Rohrleitungssystemen eingesetzt. Die Ventil- oder Rückschlagklappe wird zwischen den Flanschenden zweier Rohre angeordnet und die Ventilklappen sind entweder selbstschließend, wenn die Strömungsgeschwindigkeit des Fluids in den Leitungen durch die Durchflussöffnung hindurch stagniert bzw. zurückfließt, oder zum Öffnen und Schließen kann ein geeigneter Antrieb vorgesehen sein. Um insbesondere bei schnell abfallenden Strömungsgeschwindigkeiten ein Schließen der Ventil- oder Rückschlagklappe zu erreichen, bevor eine nennenswerte Strömung in umgekehrter Richtung erfolgt, ist ferner bekannt, die Ventilklappe zusätzlich mit einer Feder auszurüsten, die nicht nur den Schließvorgang beschleunigt, sondern auch in der Schließstellung ein Schlagen der Klappenscheibe der Ventilklappe verhindert. Eine derartige, gattungsgemäße Ventilklappenarmatur mit einer Rückschlagklappe ist aus der DE 89 09 368 U1 bekannt.

Aus der DE 1 198 630 ist eine Ventil- bzw. Rückschlagklappe bekannt, bei der die Ventilklappe etwa mittig gelagert ist und am Umfang mit einem Klappendichtring versehen ist, der sich im Schließzustand gegen einen kegelförmigen Gehäusedichtring anstellt.

Aus der DE 10 2009 041 222 A1 ist zur Überwachung einer Turbomaschine eine Rückschlagklappenarmatur mit außermittig gelagerter Ventilklappe bekannt, bei welcher mittels einer Überwachungseinrichtung der Fluiddruck am Ein- und Austritt der Rückschlagarmatur sowie die Temperatur des Fluids am Eintritt erfasst werden. Ferner wird der Massenstrom des Fluids unter Beachtung von Druck und Temperatur aus einem Ansaugvolumenstrom am Kompressoreintritt oder von einem Durchflusssensor hinter der Rückschlagklappe ermittelt, und es soll auch die Schwenkstellung der Klappe ermittelt werden, um durch einen Vergleich zwischen der tatsächlichen Stellung der Klappe und den Durchflussgrößen der Armatur Fehlfunktionen der Armatur zu detektieren.

Aufgabe der Erfindung ist es, eine Ventilklappenarmatur insbesondere als Rückschlagschutz für Turbinen in Hochdruckleitungen zu schaffen, die mit geringem apparativen Aufwand eine funktionstechnische Überprüfung der Ventilklappenarmatur ermöglicht.

Zur Lösung dieser Aufgabe wird erfindungsgemäß vorgeschlagen, dass eine Detektionseinrichtung zum Erfassen der Endstellungen und/oder der jeweiligen aktuellen Stellung der Ventilklappe vorgesehen ist, wobei die Detektionseinrichtung einen vorzugsweise lose an der Ventilklappe anliegenden Detektionsstößel aufweist, der durch eine Schwenkbewegung der Ventilklappe entlang seiner Stößelachse axial verschiebbar ist. Durch das Koppeln der Schwenkbewegung der Ventilklappe mit einer Hubbewegung eines Detektionsstößels kann auf vergleichsweise einfache Weise eine insbesondere permanent detektierbare Stellungsanzeige des Öffnungswinkels der Ventilklappe geschaffen werden, die sowohl vom Personal auf Sicht, vor allem aber auch in signaltechnisch auswertbarer Art und Weise abgetastet, angezeigt und weiterverarbeitet werden kann.

Insbesondere vorteilhaft ist, wenn die Ventilklappe mit einer vorzugsweise um eine Rollenachse drehbaren Rolle versehen ist, an der der Detektionsstößel mit einem Stößelende anliegt. Durch das Zusammenspiel einer vorzugsweise um ihre Rollenachse drehbaren Rolle mit dem Stößelende kann eine quasi reibungs- und spielfreie Übertragung der Öffnungsbewegung der Ventilklappen in eine Hubbewegung des Detektionsstößels umgesetzt werden, weswegen dann die Öffnungsbewegung (und Schließbewegung) der Ventilklappe von dem Vorhandensein einer Detektionseinrichtung quasi nicht beeinflusst wird. Besonders vorteilhaft ist hierbei, wenn das erste Stößelende einen verbreiterten Kopf mit vorzugsweise ebener Unterseite aufweist.

Um ein besonders dichtes und sicheres Schließen der Ventilklappe zu erreichen, kann gemäß einer vorteilhaften Ausgestaltung die Ventilklappe eine Klappenscheibe als Schließkörper für die Durchflussöffnung aufweisen, die beweglich an einem um die Schwenkachse schwenkbaren Schwenkhebel gelagert ist. Durch das zusätzliche Bewegungsspiel kann eine im Regelfall an der Klappenscheibe vorhandene Ringdichtung optimal und mit gewissem Nachstelleffekt an die Umfangswand bzw. Dichtsitzfläche der Durchflussöffnung angedrückt werden. Die Schwenkachse kann in der Ebene der Durchflussöffnung liegen, ist allerdings vorteilhafterweise gegenüber der Durchflussöffnung nach oben versetzt, um auch Gravitationskräfte für ein automatisches Schließen der Ventilklappe nutzen zu können. Gemäß einer besonders einfachen Ausgestaltung weist der Schwenkhebel zwei starr miteinander verbundene Schwenkarme auf, an denen die Rolle angeordnet ist und an denen vorzugsweise auch ein Kippbolzen für die kippbare Lagerung der Klappenscheibe befestigt ist. Durch das Vorhandensein von zwei Schwenkarmen kann der Abstand zwischen diesen Schwenkarmen für die Positionierung und Unterbringung der Rolle und zugleich auch für die Unterbringung eines an der Rückseite der Klappenscheibe ausgebildeten Lagerauges zum Zusammenwirken mit dem Kippbolzen sorgen.

Die Schwenkachse und die Rollenachse verlaufen vorzugsweise parallel zueinander und zugleich beabstandet voneinander, wobei vorzugsweise der Detektionsstößel senkrecht zu beiden Achsen verschieblich am Gehäuse gelagert ist.

Gemäß einer besonders vorteilhaften Ausgestaltung ist die Ventilklappenarmatur mit einem Schwenkantrieb gekoppelt, der die Ventilklappe, ggf. zusätzlich zu den Gravitationskräften, in Schließstellung hält und der vor deren strömungsabhängigen Öffnen zuerst betätigt werden muss. Bei dieser Ausgestaltung ist insbesondere vorteilhaft, wenn der Schwenkhebel mittels einer Schwenkbuchse drehbar an einer Schwenkwelle gelagert ist, die mit ihrer Wellenachse die Schwenkachse bildet, wobei dann vorzugsweise die Schwenkwelle drehfest mit einem außen am Gehäuse angeflanschten Schwenkantrieb gekoppelt ist und zu beiden Seiten der Schwenkbuchse an der Schwenkwelle ein Mitnahmering drehfest arretiert ist. Die Schwenkbuchse und die Mitnahmeringe können dann z.B. an den einander zugewandt liegenden Stirnseiten zumindest partiell mit Wendelflächen zur Erzielung eines Freilaufs zwischen Schwenkbuchse und Mitnahmering ausgebildet sein. Bei dieser Ausgestaltung kann, sofern der Schwenkantrieb nicht betätigt ist, über die Schwenkwelle und die drehfest mit dieser verbundenen Mitnahmeringe der Schwenkhebel und damit auch die Klappenscheibe in ihrer Schließstellung gehalten werden. Nur falls der Schwenkantrieb betätigt wird und die Schwenkwelle ausreichend weit aufschwenkt, entsteht ein Freiraum bzw. Freilauf für eine Relativbewegung zwischen Schwenkbuchse und Mitnahmering, über welchen die Ventilklappe durch die Kraft des in Strömungsrichtung strömenden Fluids bis zu ihrer Maximalstellung aufgeschwenkt werden kann bzw. selbsttätig bei nachlassender Strömung in ihre Schließstellung zurückkehren kann. Befindet sich hingegen die Schwenkwelle in der Ausgangsstellung, liegen die Wendelflächen aneinander, und ein Öffnen der Ventilklappe wird durch die Gegenkraft des ausgeschalteten Schwenkantriebs weitestgehend oder vollständig verhindert.

Da der Detektionsstößel mit seinem ersten Stößelende in den Innenraum des Gehäuses eintaucht ist es im Regelfall erforderlich, den Stößel aus dem Gehäuse herauszuführen. Hierzu dient vorzugsweise eine kombinierte Führungs- und Dichtungsbuchse im Gehäuse, insbesondere in einem lösbaren Deckelteil des Gehäuses. Um zugleich eine optimale Hubbewegung des Detektionsstößels zu erreichen, ist insbesondere vorteilhaft, wenn der Detektionsstößel an zwei voneinander beabstandeten Führungsbuchsen geführt ist. Gleichzeitig ist besonders vorteilhaft, insbesondere bei einem lose mit der Ventilklappe zusammenwirkenden Detektionsstößel, wenn der Detektionsstößel gegen die Rückstellkraft einer Rückstellfeder bewegbar ist, damit der Detektionsstößel bei der Öffnungsbewegung mit möglichst geringer Kraft in Schließrichtung der Ventilklappe vorgespannt wird und der Klappe folgt, ohne jedoch nennenswert Kräfte in Schließrichtung auf die Ventilklappe auszuüben.

Insbesondere bei Verwendung der Ventilklappenarmatur für Fluide mit hohen Temperaturen ist besonders vorteilhaft, wenn am Gehäuse eine von dem Detektionsstößel durchgriffene Zwischensäule, insbesondere Isoliersäule befestigt ist. Diese Zwischen- oder Isoliersäule kann besonders vorteilhaft zugleich auch einen Aufnahmeraum für die Feder in ihrem Innenraum bilden. Ferner ist vorteilhaft, wenn die Säule zwischen den Führungsbuchsen angeordnet ist, wodurch zumindest die dem ersten Stößelende abgewandt liegende Führungsbuchse erheblich geringeren Temperaturen und damit Beanspruchungen unterliegt als die Führungs- und Dichtbuchse unmittelbar im Gehäusedurchgriff.

Über den Detektionsstößel wird der Schwenkwinkel der Ventilklappe in einen Hub umgesetzt, der als Detektionsgröße für den Schwenkwinkel herangezogen werden kann. Besonders vorteilhaft ist dann, wenn dem zweiten Ende des Detektionsstößels wenigstens eine Mess- und/oder Anzeigeeinrichtung zugeordnet ist, über die der Hub- und damit der Schwenkwinkel angezeigt und vorzugsweise elektronisch oder elektrisch gemessen werden kann. Die Messeinrichtung kann wenigstens zwei Näherungsinitiatoren aufweisen, wobei mit dem ersten Näherungsinitiator die Schließstellung und mit dem zweiten Näherungsinitiator die maximale Öffnungsstellung detektierbar ist. Alternativ oder zusätzlich kann die Messeinrichtung eine Wegmesseinrichtung, vorzugsweise einen Linearpotentiometer, zur Detektion der jeweiligen aktuellen Schwenkstellung aufweisen. Über das Linearpotentiometer kann für jeden Schwenkwinkel eine elektrische Größe bestimmt werden, die in einen Mess- oder Sensorwert für eine Überwachungseinrichtung umgesetzt werden kann. Besonders vorteilhaft ist, wenn sowohl Näherungsinitiatoren als auch eine Wegmesseinrichtung vorhanden sind und am zweiten Ende des Detektionsstößels sowohl ein erster Auslöser für die Näherungsinitiatoren als auch, vorzugsweise unabhängig hiervon, ein zweiter Auslöser als Stellglied für die Wegmesseinrichtung angeordnet ist.

Besondere Vorteile bildet auch die Kombination einer Isoliersäule mit einer Mess- und/oder Anzeigeeinrichtung, wenn die Isoliersäule zwischen dem die Ventilklappe aufnehmenden Gehäuse und der Mess- bzw. Anzeigeeinrichtung positioniert ist.

Weitere Vorteile und Ausgestaltungen einer erfindungsgemäßen Ventilklappen- bzw. Rückschlagarmatur ergeben sich aus der nachfolgenden Beschreibung eines schematisch in der Zeichnung gezeigten Ausführungsbeispiels. In der Zeichnung zeigen:
- **Fig. 1**: eine erfindungsgemäße Ventilklappenarmatur in Schließstellung (durchgezogen) und Öffnungsstellung (strichpunktiert) in einem Vertikalschnitt;
- **Fig. 2**: eine Schnittansicht entlang II-II in Fig. 1;
- **Fig. 3**: eine Detailansicht der Isoliersäule gemäß III in Fig. 1;
- **Fig. 4**: eine Detailansicht der Anzeige- und Messeinrichtung; und
- **Fig. 5**: schematisch vereinfacht den Näherungsinitiator nebst Auslöser im Detail.

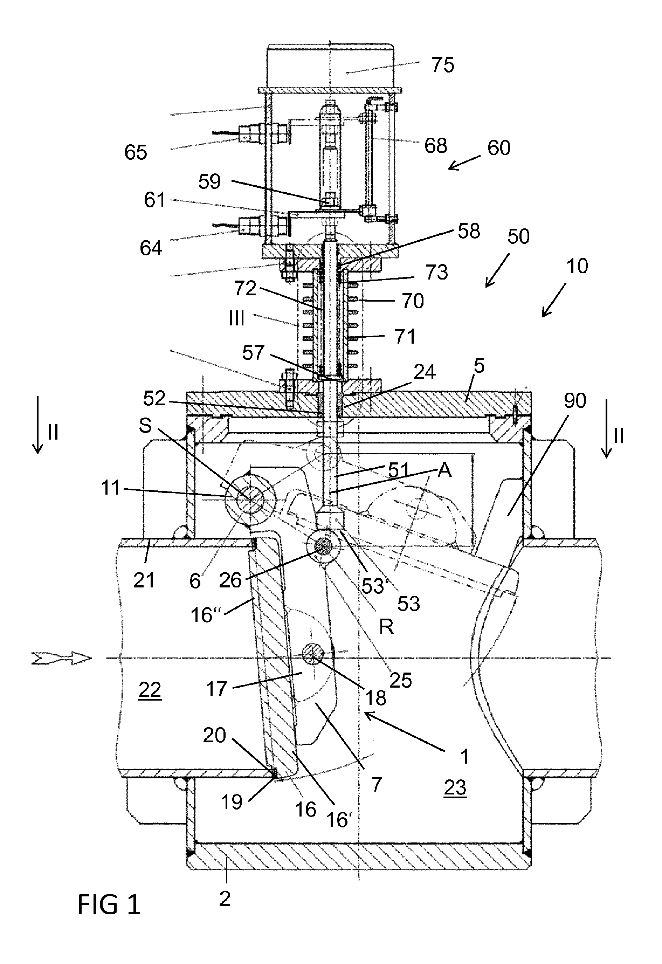

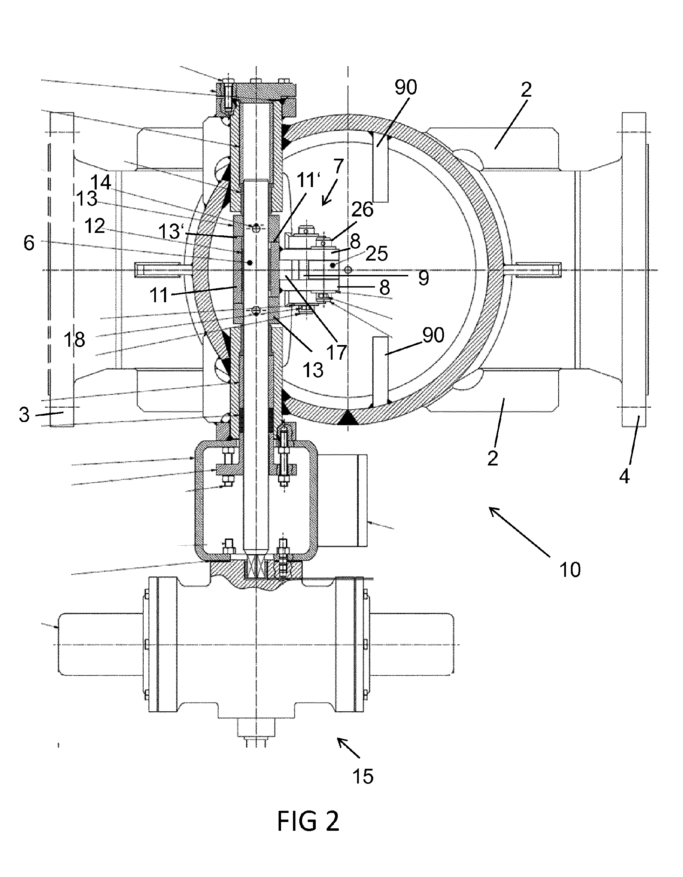

Die in Fig. 1 und 2 insgesamt mit Bezugszeichen 10 bezeichnete Ventilklappenarmatur bildet vorzugsweise eine Rückschlagklappenarmatur mit frei schwenkbarer Ventil- bzw. Rückschlagklappe 1. Die Rückschlagklappe 1 ist hierzu in einem Gehäuse 2 mit einem eintrittsseitigen Rohrflansch 3 und einem austrittsseitigen Rohrflansch 4 angeordnet, an welcher Rohrleitungen entsprechender Nennweiten je nach Verwendungszweck der Rückschlagarmatur 10 angeschlossen werden können. Das Gehäuse 2 ist an der Oberseite mittels eines lösbaren Deckelteils 5 verschlossen. Die Ventilklappe 1 ist im gezeigten Ausführungsbeispiel um eine Schwenkachse S schwenkbar, die von der Mittelachse einer Schwenkwelle 6 gebildet wird. Die Ventilklappe 1 umfasst einen Hebelarm 7, der im Wesentlichen aus zwei starr miteinander verbundenen Schwenkarmen 8 besteht, zwischen denen ein Zwischenraum 9 freibleibt. Die Schwenkarme 8 sind an einer Schwenkbuchse 11 angeschweißt, die sich unter Zwischenlage einer Gleitbuchse 12 am Außenumfang der Schwenkwelle 6 schwenkbar abstützt. Zu beiden Seiten der Schwenkbuchse 6 sind Mitnahmeringe 13 angeordnet, die im gezeigten Ausführungsbeispiel über Stifte, die in entsprechende Mitnahmebohrungen 14 in der Schwenkwelle 6 einfassen, drehfest mit der Schwenkwelle 6 verbunden sind. Die der Schwenkbuchse 11 zugewandt liegenden Stirnflächen 13' der Mitnahmeringe 13 bzw. die äußeren Stirnflächen 11' der Schwenkbuchse 11 verlaufen beide partiell über hier wenigstens 60 ° wendelförmig, um einen Freilauf zwischen den drehfest mit der Schwenkwelle 6 verbundenen Mitnahmeringen 13 und der im Prinzip frei drehbar auf der Schwenkwelle 6 gelagerten Schwenkbuchse 11 zu erzielen. Die Schwenkwelle 6 wiederum ist drehfest mit einem außen am Gehäuse 2 angeflanschten Schwenkantrieb 15 gekoppelt, der vorzugsweise aus einem Pneumatikantrieb besteht und in unbetätigtem Zustand die Ventilklappe 1 in Schließrichtung bzw. in Schließstellung vorspannt bzw. hält. Das Winkelmaß, über welches die Stirnflächen der Schwenkbuchse 11 und der Mitnahmeringe 13 wendelförmig verlaufen, hängt von dem maximalen Öffnungswinkel ab. Bei der in den Figuren gezeigten Ventilarmatur beträgt der maximale Öffnungswinkel der Ventilklappe 1 aufgrund der an der Innenseite des Gehäuses vorgesehenen Anschläge 90 etwas weniger als 60°, weswegen ein Freilauf über annähernd 60° ausreicht und entsprechend nur über 60° realisiert werden muss. Ein Öffnen der Ventilklappe 1 aufgrund eines strömenden Mediums (Mediumfluss) ist nur dann möglich, wenn zuerst die Mitnehmer 13 derart verschwenkt sind, dass der Freilauf ein Aufschwenken der Ventilklappe 1 um die Schwenkwelle 6 erlaubt. Der Schwenkantrieb 15 ist jedoch vorzugsweise nur bedingt geeignet, die Ventilklappe 1 gegen den anströmenden Mediumfluss in Schließstellung zu halten. Falls mithin ein Mediumfluss erwartet wird, sollte sich die Schwenkwelle 6 in demjenigen Schwenkzustand befinden, in welchem der Freilauf aktiv ist und ein Aufschwenken der Ventilklappe 1 erlaubt. In der Schließstellung, in der die ventilklappe den Durchfluss 22 versperrt, blockieren die Mitnahmeringe 13 ein Aufschwenken der mit der Ventilklappe 1 drehfest verbundene Schwenkbuchse 11, und damit auch der Ventilklappe 1.

Die Fig. 1 zeigt in durchgezogenen Linien die Ventilklappe 1 in Schließstellung. Wie gut zu erkennen ist, ist die Ventilklappe 1 mehrteilig ausgebildet und weist neben einem Hebelarm 7, an dessen oberen Ende die Schwenkbuchse 11 angeschweißt ist, eine Klappenscheibe 16 auf, die an ihrer Klappenrückseite 16' mit einem Lagerauge 17 für einen Kippbolzen 18 versehen ist. Die Vorderseite 16" der Klappenscheibe 16 wiederum ist an ihrem Umfangsrand mit einer umlaufenden Einziehung 19 versehen, in welcher ein Dichtring 20 angeordnet ist, der am Umfang des Rohrabschnitts 21 anliegt, der mit dem eintrittsseitigen Gehäuseflansch 3 verbunden ist und die abzusperrende Durchflussöffnung 22 bildet. Durch die über den Kippbolzen 18 erreichte Kippbarkeit der Klappenscheibe 16 relativ zum Hebelarm 7 kann sich die Klappenscheibe 16 optimal an die mit der Stirnseite des Rohrabschnitts 21 eine Dichtsitzfläche für die Durchflussöffnung 22 bildende Fläche anlegen und dort die Durchflussöffnung 22 abdichten. Das Lagerauge 17 an der Rückseite der Klappenscheibe 6 befindet sich im Montagezustand zwischen den beiden Schwenkarmen 8 des Hebelarms 7.

Ein erfindungswesentliches Merkmal besteht in einer insgesamt mit Bezugszeichen 50 bezeichneten Detektionseinrichtung, über welche die jeweilige aktuelle Stellung der Ventilklappe 1 erfasst und ggf. über eine insgesamt mit Bezugszeichen 60 bezeichnete Mess- und Anzeigeeinrichtung als optisches, elektronisches oder elektrisches Signal an eine übergeordnete Überwachungseinrichtung o.dgl. weitergegeben werden kann. Die Detektionseinrichtung 60 hat als einziges, in den Innenraum 23 im Gehäuse 2 eintauchendes bzw. befindliches Element einen Detektionsstößel 51, der einen Durchgriff 24 im Deckel 5 des Gehäuses 2 durchfasst. In dem Deckeldurchgriff 24 wird der Detektionsstößel 51 mittels einer ersten Führungsbuchse 52 derart geführt, dass der Detektionsstößel 51 im Prinzip ausschließlich entlang seiner Stößelachse A bewegbar ist. Die Führungsbuchse 52 kann auch für eine Abdichtung des Gehäuseinnenraums 23 sorgen. Das untere, freie Stößelende des Detektionsstößels 51 ist mit einem Stößelkopf 53 mit ebener Unterseite 53' versehen, wobei der Stößelkopf 53 breiter ist als der oberhalb befindliche Bereich des Schaftes des Detektionsstößels 51. Der Detektionsstößel 51 liegt mit der ebenen Unterseite 53' lose am Schwenkhebel 7 der Ventilklappe 1 an. Für eine optimierte Übertragung der Schwenkbewegung der Ventilklappe 1 auf den Detektionsstößel 51 ist zwischen den Schwenkarmen 8 des Hebelarms 7 eine Rolle 25 drehbar befestigt, die hierzu drehbar um ihre Rollenachse R auf einem Achsbolzen 26 sitzt, der die Schwenkarme 8 beidseitig in Bolzenaufnahmen durchfasst und mit Splinten o.dgl. an den Schwenkarmen 8 des Hebelarms 7 gesichert ist. Schwenkt nun die Ventilklappe 1 von der Schließstellung, die in Fig. 1 mit durchgezogenen Linien dargestellt ist, in die Öffnungsstellung (strichpunktiert in Fig. 1 dargestellt), wird der lose am Umfang der Rolle 25 anliegende Detektionsstößel 51 in eine Hubbewegung versetzt und entlang der Stößelachse A nach oben verschoben. Der Hub des Detektionsstößels 51 entspricht hierbei dem Öffnungswinkel der Ventilklappe 1. Der Stößelkopf 53 ist zwar starr am Detektionsstößel 51 befestigt, liegt jedoch lose am Umfang der Rolle 25 an, die sich frei drehen kann, weswegen der Detektionsstößels 51 die Schwenkbewegung der Ventilklappe 1 als Hubbewegung quasi spiel- und reibungsfrei mitmacht.

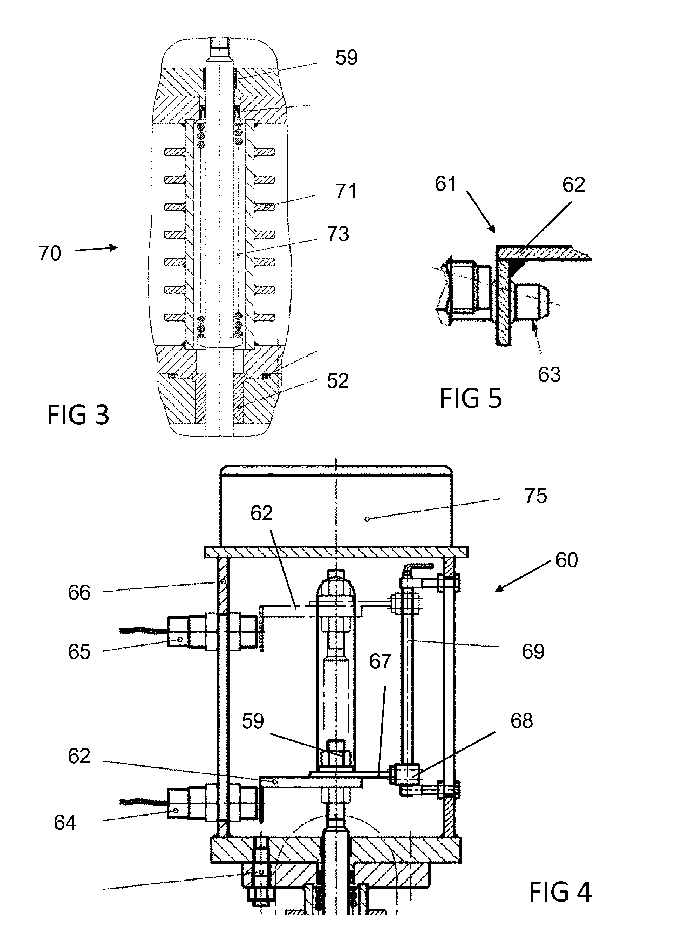

Im gezeigten Ausführungsbeispiel hat der Detektionsstößel 51 eine vergleichsweise große Länge die mehr als das Doppelte der Eintauchtiefe des Detektionsstößels 51 in den Innenraum 23 des Gehäuses 2 der Ventilklappenarmatur 10 ausmacht. Der Detektionsstößel 51 durchfasst mit seinem Schaft zuerst eine Zwischen- bzw. Isoliersäule 70, die insbesondere dann vorgesehen ist, wenn mit der Ventilklappenarmatur 10 eine Absperrung von Fluiden vorgenommen werden soll, die hohe Temperaturen aufweisen. Die Isoliersäule 70 ist am Umfang mit Kühlrippen 71 versehen und die Länge der Isoliersäule 70 kann je nach Anwendungsfall und gewünschtem Temperaturunterschied zwischen dem Deckel 5 der Ventilklappenarmatur 10 einerseits und der Anzeigeeinrichtung 60 andererseits gewählt werden. Der Innenraum 72 der Isoliersäule 70 wird im gezeigten Ausführungsbeispiel zugleich zur Unterbringung einer Feder 73 verwendet, mit der eine Rückstellkraft auf den Detektionsstößel 51 ausgeübt werden kann. Am Detektionsstößel 51 ist ein tellerartiger Vorsprung 57 ausgebildet, dessen Außendurchmesser kleiner ist als der Innendurchmesser des Innenraums 72 der Isoliersäule 70. An dem tellerartigen Vorsprung 57 liegt die Rückstellfeder 73 an, die vorzugsweise in der Schließstellung der Ventilklappe 1 vollständig spannungsfrei oder nahezu ungespannt ist und ausschließlich durch ein Aufschwenken der Ventilklappe 1 und damit eine Hubbewegung des Detektionsstößels 51 nach oben unter Spannung gesetzt wird, und dann eine Rückstellkraft gegen den Hub des Detektionsstößels 51 ausübt. Oberhalb der Isoliersäule 70 befindet sich eine zweite Führungsbuchse 58 für den Detektionsstößel 51. Der Detektionsstößel 51 durchfasst auch diese zweite Führungsbuchse 58 und taucht in den Innenraum der Mess- und Auswerteeinrichtung 60 ein. Am bzw. nahe des oberen, freien Endes 59 des Detektionsstößels 51 sind im gezeigten Ausführungsbeispiel zwei Auslöser zum Anzeigen bzw. Messen des aktuellen Hubs und damit der Schwenkstellung angeordnet. Der erste Auslöser ist in den Figuren 1, 4 und 5 mit Bezugszeichen 61 bezeichnet und weist ein L-förmiges Winkelblech 62 auf, an dem ein Auslösemagnet 63 oder ein anderer Auslösekopf o.dgl. befestigt ist. Der erste Auslöser 61 bzw. der Magnet 63 wirken mit zwei Näherungsinitiatoren 64, 65 zusammen, die am Gehäuse 66 der Auswerte- und Messeinrichtung 60 im Abstand voneinander und senkrecht versetzt zueinander befestigt sind. Der untere Näherungsinitiator 64 löst dann aus, wenn die Ventilklappe 1 die Schließstellung erreicht hat, der obere Näherungsinitiator 65 wiederum löst, wie in Fig. 4 in gestrichelten Linien angedeutet, aus, wenn die Ventilklappe 1 ihre maximale Öffnungsstellung erreicht hat und entsprechend der Auslöser 61 über den Detektionsstößel 51 nach oben verschoben wurde. Mit zwei Näherungsinitiatoren 64, 65 lässt sich nur erfassen, ob die Ventilklappe (1, Fig. 1) ihre Schließ- oder maximale Öffnungsstellung erreicht hat. Da dies in den meisten Anwendungsfällen nicht ausreicht, ist am freien Stößelende 59 ein zweiter Auslöser 67 befestigt, der an seinem freien Ende einen hier ringförmigen Schleifer 68 als Stellglied aufweist, der entlang einer hier stabförmigen Widerstandsbahn aufgrund der Hubbewegung des Detektionsstößels 51 verschoben wird. Je nach Stellung des Schleifers 68 an der Widerstandsbahn 69 ändert sich der Teilwiderstand, der entsprechend über eine Elektronik (nicht gezeigt) im Elektronikgehäuse 45 an der Oberseite der Auswerte- und Messeinrichtung 60 abgegriffen werden kann. Der gezeigte Linearpotentiometer bzw. Schiebepotentiometer bildet eine Wegmesseinrichtung, die unabhängig von der Stellungsanzeige wirkt, die mit den Näherungsinitiatoren 64, 65 bewirkt wird.

Für den Fachmann ergeben sich aus der vorhergehenden Beschreibung zahlreiche Modifikationen, die in den Schutzbereich der anhängenden Ansprüche fallen sollen. Die Ventilklappe könnte als reine, selbsttätig schließende und durch Fluidbewegung öffnende Ventilklappe ausgeführt sein und der Stellantrieb als zusätzliches Schließorgan bzw. Sicherungsorgan für die Schließstellung der Ventilklappe könnte entfallen. Die Wegmesseinrichtung könnte eine andere Einrichtung als den gezeigten Schiebepotentiometer aufweisen. Der Schiebepotentiometer und/oder die Näherungsinitiatoren könnten auch einzeln zum Einsatz kommen. Die Klappenscheibe könnte fest mit dem Hebelarm verbunden sein. Der maximale Schwenkwinkel zwischen Schließstellung und Öffnungswinkel kann variieren. Die Betätigungsrolle könnte auch fest mit dem Hebel verbunden sein, da bereits die gerundete Kontur ein relativ gutes Gleiten zwischen Stößelkopf einerseits und Hebel andererseits ermöglicht. Solche und weitere Modifikationen sollen in den Schutzbereich der anhängenden Ansprüche fallen.

## Patentansprüche

1. Ventilklappenarmatur insbesondere für Hochdruckleitungen, mit einem eine Durchflussöffnung (22) aufweisenden Gehäuse (2) und mit einer im Gehäuseinnenraum (23) angeordneten, um eine Schwenkachse (S) schwenkbaren Ventilklappe (1), die zwischen einer die Durchflussöffnung (22) verschließenden Schließstellung und Öffnungsstellungen verschwenkbar ist, **gekennzeichnet durch** eine Detektionseinrichtung (50) zum Erfassen der Endstellung und/oder der jeweiligen aktuellen Stellung der Ventilklappe (1), wobei die Detektionseinrichtung (50) einen vorzugsweise lose an der Ventilklappe (1) anliegenden Detektionsstößel (51) aufweist, der **durch** eine Schwenkbewegung der Ventilklappe (1) entlang seiner Stößelachse (A) axial verschiebbar ist.

2. Ventilklappenarmatur nach Anspruch 1, **dadurch gekennzeichnet, dass** die Ventilklappe mit einer vorzugsweise um eine Rollenachse drehbaren Rolle (25) versehen ist, an der der Detektionsstößel (51) mit einem Stößelende (53) anliegt.

3. Ventilklappenarmatur nach Anspruch 2, **dadurch gekennzeichnet, dass** das erste Stößelende (53) einen verbreiterten Kopf mit vorzugsweise ebener Unterseite (53') aufweist.

4. Ventilklappenarmatur nach einem der Ansprüche 1 bis 3, **dadurch gekennzeichnet, dass** die Ventilklappe (1) eine Klappenscheibe (16) als Schließkörper für die Durchflussöffnung (22) aufweist, die beweglich an einem um die Schwenkachse (S) schwenkbaren Schwenkhebel (7) gelagert ist.

5. Ventilklappenarmatur nach Anspruch 4, **dadurch gekennzeichnet, dass** der Schwenkhebel (7) zwei starr miteinander verbundene Schwenkarme (8) aufweist, an denen die Rolle (25) angeordnet ist und an denen ein Kippbolzen (18) für die kippbare Lagerung der Klappenscheibe (16) befestigt ist.

6. Ventilklappenarmatur nach einem der Ansprüche 2 bis 5, **dadurch gekennzeichnet, dass** die Schwenkachse (S) und die Rollenachse (R) parallel zueinander und beabstandet voneinander verlaufen, und dass der Detektionsstößel (51) senkrecht zu beiden Achsen (S, R) verschieblich am Gehäuse (2) gelagert ist.

7. Ventilklappenarmatur nach einem der Ansprüche 3 bis 6, **dadurch gekennzeichnet, dass** der Schwenkhebel (7) mittels einer Schwenkbuchse (11) drehbar an einer Schwenkwelle (6) gelagert ist, die vorzugsweise drehfest mit einem außen am Gehäuse (2) angeflanschten Schwenkantrieb (15) gekoppelt ist, wobei vorzugsweise an der Schwenkwelle (6) zu beiden Seiten der Schwenkbuchse (11) ein Mitnahmering (13) drehfest arretiert ist, wobei die Schwenkbuchse (11) und die Mitnahmeringe (13) an den einander zugewandt liegenden Stirnseiten (11', 13') zumindest partiell mit Wendelflächen zur Erzielung eines Freilaufs zwischen Schwenkbuchse und Mitnahmering ausgebildet sind.

8. Ventilklappenarmatur nach einem der Ansprüche 1 bis 7, **dadurch gekennzeichnet, dass** der Detektionsstößel (51) an zwei voneinander beabstandeten Führungsbuchsen (52; 58) geführt ist.

9. Ventilklappenarmatur nach einem der Ansprüche 1 bis 8, **dadurch gekennzeichnet, dass** der Detektionsstößel (51) gegen die Rückstellkraft einer Feder (73) bewegbar ist, wobei vorzugsweise die Feder zwischen den Führungsbuchsen (52; 58) angeordnet ist.

10. Ventilklappenarmatur nach einem der Ansprüche 1 bis 9, **dadurch gekennzeichnet, dass** am Gehäuse (2) eine von dem Detektionsstößel (51) durchgriffene Isoliersäule (70) befestigt ist.

11. Ventilklappenarmatur nach Anspruch 9 und 10, **dadurch gekennzeichnet, dass** die Feder (73) im Innenraum der Isoliersäule (70) angeordnet ist und/oder dass die Isoliersäule (70) zwischen den Führungsbuchsen (52; 58) angeordnet ist.

12. Ventilklappenarmatur nach einem der Ansprüche 1 bis 11, **dadurch gekennzeichnet, dass** dem zweiten Ende (59) des Detektionsstößels (51) wenigstens eine Mess- und/oder Anzeigeeinrichtung (60) zugeordnet ist.

13. Ventilklappenarmatur nach Anspruch 12, **dadurch gekennzeichnet, dass** die Messeinrichtung wenigstens zwei Näherungsinitiatoren (64; 65) aufweist, wobei mit dem ersten Näherungsinitiator (64) die Schließstellung und mit dem zweiten Näherungsinitiator (65) die maximale Öffnungsstellung detektierbar ist.

14. Ventilklappenarmatur nach Anspruch 12 oder 13, **dadurch gekennzeichnet, dass** die Messeinrichtung (60) eine Wegmesseinrichtung, vorzugsweise ein Linearpotentiometer (68, 69), zur Detektion der jeweiligen aktuellen Schwenkstellung aufweist, wobei vorzugsweise am zweiten Ende des Detektionsstößels (51) ein erster Auslöser (61) für die Näherungsinitiatoren und unabhängig hiervon ein Stellglied (68) für die Wegmesseinrichtung angeordnet ist.

15. Ventilklappenarmatur nach Anspruch 10 und einem der Ansprüche 12 bis 14, **dadurch gekennzeichnet, dass** die Isoliersäule (70) zwischen dem Gehäuse (2) und der Mess- und/oder Anzeigeeinrichtung (60) positioniert ist.
